# EUROPÄISCHE PATENTSCHRIFT

(11) **EP 1 982 818 B1**
(45) Veröffentlichungstag und Bekanntmachung des Hinweises auf die Patenterteilung: **13.01.2010**
(21) Anmeldenummer: 07008155.9
(22) Anmeldetag: 21.04.2007
(51) Int. Cl.: B29C 45/16, B29C 45/14, F16B 13/06, F16B 13/08

(54) **Verfahren zur Herstellung einer Kunststoffmuffe**
Method for producing a plastic collar
Procédé de fabrication d'un manchon en plastique

(43) Veröffentlichungstag der Anmeldung: 22.10.2008
(73) Patentinhaber: Häfele Berlin GmbH & Co KG, 12277 Berlin (DE)
(72) Erfinder: Von Wilcke, Michael, 16547 Birkenwerder (DE)
(74) Vertreter: Kohler Schmid Möbus

(56) Entgegenhaltungen:
- EP-A2- 1 323 934
- DE-A1- 2 907 475
- DE-U1- 20 107 661

## Beschreibung

Kunststoffmuffen mit eingesetztem Metallstift, welcher beidseits mit aus Kunststoff bestehenden Köpfen, Konussen oder dergleichen versehen ist, werden in bekannter Weise in gesonderten Spritzvorgängen hergestellt, wobei die Kunststoffmuffe aus zwei schwenkbar miteinander verbundenen und miteinander verrastbaren Hälften besteht. Die Metallstifte werden in einem anderen Spritzvorgang mit den Köpfen bzw. Konussen versehen. Anschließend werden die Metallstifte in die eine Hälfte der Kunststoffmuffe eingelegt, dann beide Hälften aufeinander geschwenkt und miteinander verrastet. Nachteilig hierbei ist, dass die Kunststoffmuffen und die Köpfe bzw. Konusse an den Stiften gesondert gespritzt und erst dann zusammengebracht werden. Danach müssen die Stifte noch in die Kunststoffmuffen eingelegt und diese wie oben erläutert geschlossen werden.

Nachdem derartige Kunststoffmuffen in großen Stückzahlen hergestellt werden, stellt sich die Aufgabe, den Herstellungsvorgang grundlegend zu vereinfachen. Zu diesem Zweck wird die Kunststoffmuffe mit eingesetztem Kern in einem Spritzwerkzeug gespritzt, anschließend der Kern gezogen sowie der Metallstift ohne Köpfe, Konusse oder dergleichen in die Bohrung der im Spritzwerkzeug befindlichen Kunststoffmuffe eingeschoben und danach werden im gleichen Spritzwerkzeug die Köpfe, Konusse oder dergleichen beidseitig am Metallstift angespritzt und dann die Kunststoffmuffe mit eingesetztem Metallstift aus dem Werkzeug ausgeworfen. Dadurch ergeben sich in der Fertigung erhebliche Vorteile, da sowohl die Kunststoffmuffe als auch der Metallstift in einem Spritzwerkzeug hergestellt werden können und außerdem nach dem Spritzen keine weiteren Arbeitsvorgänge, wie beispielsweise das Zusammenklappen der Kunststoffmuffe, mehr erforderlich sind.

Nach einem weiteren Merkmal der Erfindung werden die Köpfe, die Konusse oder dergleichen aus einem, andere Eigenschaften aufweisenden Kunststoff als die Kunststoffmuffe gespritzt. Dabei wird insbesondere die Kunststoffmuffe aus einem Kunststoff mit höherem Schmelzgrad als dem für die Köpfe und die Konusse vorgesehenen hergestellt. Auf diese Weise kann verhindert werden, dass sich beim Anspritzen der Köpfe und der Konusse am Metallstift deren Kunststoff mit dem der Kunststoffmuffe vermischt. Dies ist vor allem dann von Bedeutung, wenn nach einem weiteren Merkmal der Erfindung bei einer als Spreizmuffe ausgebildeten Kunststoffmuffe in den teilweise durchbrochenen Spreizteil ein Konus auf das eine Ende des Metallstiftes aufgespritzt wird. Bei der Bearbeitung des Stiftes wird dann nämlich der für den Konus erforderliche Kunststoff durch die Öffnungen des Spreizteiles hindurchgespritzt, wobei sich dann die beiden Kunststoffe vermischen könnten. Dies kann auf diese Art und Weise verhindert werden.

Man kann den Kopf und den Konus gleichzeitig oder aber erst den Konus und anschließend den Kopf, oder umgekehrt, aufspritzen. Es ist zweckmäßig, den Metallstift vor dem Einschieben in die Bohrung der Kunststoffmuffe in an sich bekannter Weise an beiden Enden mit Hinterschneidungen zu versehen, damit der Kopf und der Konus einen besseren Halt auf dem Metallstift haben.

Die Zeichnung zeigt schematisch die einzelnen Verfahrensschritte, wobei das Spritzwerkzeug nicht dargestellt ist:
- Figur 1: die Ansicht einer Spreizmuffe aus Kunststoff nach dem Spritzvorgang ohne Kern,
- Figur 2: die Spreizmuffe nach Fig. 1 mit zum Einschieben angesetzten Metallstift,
- Figur 3: einen Querschnitt durch die Spreizmuffe nach Fig. 1 mit eingesetztem Metallstift mit angespritztem Konus und Kopf,
- Figur 4: eine Ansicht nach Fig. 3.

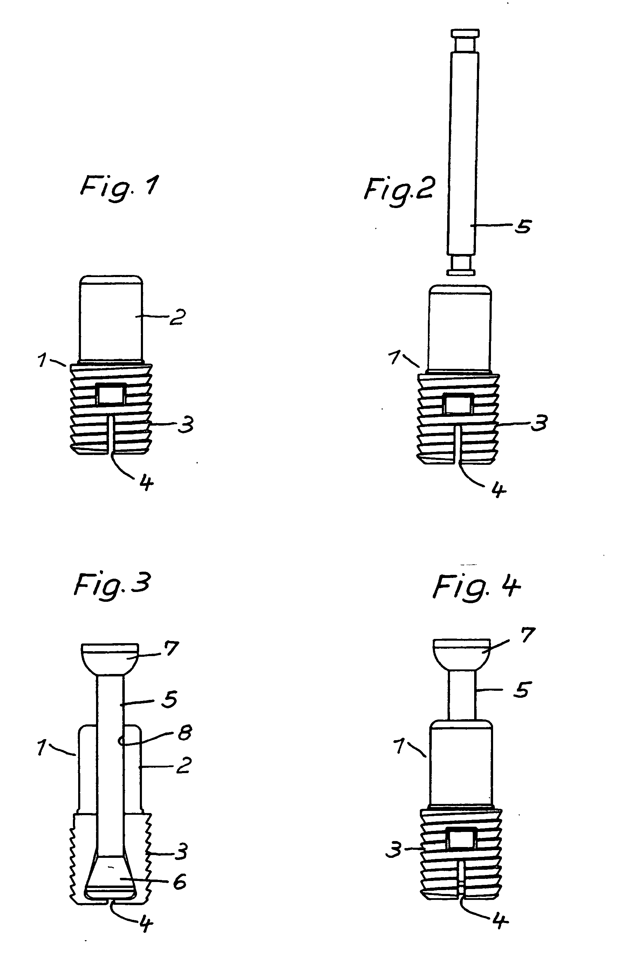

Die aus Kunststoff bestehende Spreizmuffe 1 besteht aus dem vorderen Führungsteil 2 und dem hinteren Spreizteil 3 mit den Spreizschlitzen 4. Der Metallstift 5 wird in die Bohrung 8 der Spreizmuffe 1 eingeführt und zwar bis kurz vor dem Ende des Spreizteiles 3, wie Fig. 3 zeigt. Anschließend wird in nicht dargestellter Weise der Konus 6 durch die Schlitze 4 des Spreizteiles 3 hindurch an den Metallstift 5 angespritzt und an das andere freie Ende der Kopf 7.

## Patentansprüche

1. Verfahren zur Herstellung einer Kunststoffmuffe, insbesondere Spreizmuffe, in einem Spritzwerkzeug mit einem, in eine angepasste Bohrung derselben eingesetzten Metallstift, welcher beidseits mit aus Kunststoff bestehenden Köpfen, Konussen oder dergleichen versehen ist, **dadurch gekennzeichnet, dass** die Kunststoffmuffe (1) mit eingesetztem Kern in einem Spritzwerkzeug gespritzt, anschließend der Kern gezogen sowie der Metallstift (5) ohne Köpfe (7), Konusse (6) oder dergleichen in die Bohrung (8) der im Spritzwerkzeug befindlichen Kunststoffmuffe (1) eingeschoben wird und danach im gleichen Spritzwerkzeug die Köpfe, Konusse oder dergleichen beidseits am Metallstift angespritzt und dann die Kunststoffmuffe mit eingesetztem Metallstift aus dem Werkzeug ausgeworfen werden.

2. Verfahren zur Herstellung einer Kunststoffmuffe nach Anspruch 1, **dadurch gekennzeichnet, dass** die Köpfe (7), die Konusse (6) und dergleichen aus einem, andere Eigenschaften aufweisendem Kunststoff als die Kunststoffmuffe (1) gespritzt werden.

3. Verfahren zur Herstellung einer Kunststoffmuffe nach Anspruch 2, **dadurch gekennzeichnet, dass** die Kunststoffmuffe (1) aus einem Kunststoff mit höherem Schmelzgrad als dem für die Köpfe (7) und die Konusse (6) vorgesehenen gespritzt wird.

4. Verfahren zur Herstellung einer Kunststoffmuffe nach einem oder mehreren der vorhergehenden Ansprüche, **dadurch gekennzeichnet, dass** bei einer als Spreizmuffe (1) ausgebildeten Kunststoffmuffe auf der einen Seite des Metallstiftes (5) innerhalb des teilweise durchbrochenen Spreizteiles (3) ein Konus (6) und auf der anderen Seite außerhalb der Kunststoffmuffe (1) ein Kopf (7) aufgespritzt werden.

5. Verfahren zur Herstellung einer Kunststoffmuffe nach Anspruch 4, **dadurch gekennzeichnet, dass** der Kopf (7) und der Konus (6) gleichzeitig aufgespritzt werden.

6. Verfahren zur Herstellung einer Kunststoffmuffe nach Anspruch 4, **dadurch gekennzeichnet, dass** erst der Konus (6) und anschließend der Kopf (7) oder umgekehrt angespritzt werden.

7. Verfahren zur Herstellung einer Kunststoffmuffe nach einem oder mehreren der vorhergehenden Ansprüche, **dadurch gekennzeichnet, dass** der Metallstift (5) vor dem Einschieben in die Bohrung (8) der Kunststoffmuffe (1) an beiden Enden mit Hinterschneidungen versehen wird.

## Claims

1. Method for producing a plastic sleeve, in particular an expanding sleeve, in an injection molding tool comprising a metal pin that is inserted into a matched bore of the sleeve and has on both sides heads, cones or the like of plastic material, **characterized in that** the plastic sleeve (1) with inserted core is injection-molded in an injection molding tool, the core is subsequently extracted, and the metal pin (5) without heads (7), cones (6) or the like is inserted into the bore (8) of the plastic sleeve (1) located in the injection molding tool, and thereafter, the heads, cones or the like are injection-molded on both sides of the metal pin in the same injection molding tool, and then the plastic sleeve with inserted metal pin is ejected from the tool.

2. Method for producing a plastic sleeve according to claim 1, **characterized in that** the heads (7), the cones (6) and the like are injection-molded from a plastic material that has different properties than the plastic material of the plastic sleeve (1).

3. Method for producing a plastic sleeve according to claim 2, **characterized in that** the plastic sleeve (1) is injection-molded from a plastic material having a higher degree of melting than that used for the heads (7) and the cones (6).

4. Method for producing a plastic sleeve according to one or more of the preceding claims, **characterized in that** in case of plastic sleeve formed as an expanding sleeve (1) a cone (6) is injection-molded on a on one side of the metal pin (5) within the partially open expanding part (3), and a head (7) is injection-molded on the other side outside of the plastic sleeve (1).

5. Method for producing a plastic sleeve according to claim 4, **characterized in that** the head (7) and the cone (6) are simultaneously injection-molded.

6. Method for producing a plastic sleeve according to claim 4, **characterized in that** the cone (6) is initially injection-molded and the head (7) is subsequently injection-molded or vice versa.

7. Method for producing a plastic sleeve according to one or more of the preceding claims, **characterized in that** the metal pin (5) is provided with an undercut at both ends before insertion into the bore (8) of the plastic sleeve (1).

## Revendications

1. Procédé pour fabriquer dans un moule d'injection un manchon en matière plastique, en particulier un manchon expansible, pourvu d'une broche métallique qui est insérée dans un perçage adapté de ce manchon et qui est dotée à ses deux extrémités de têtes, cônes ou analogues en matière plastique, **caractérisé en ce que** le manchon en matière plastique (1) est moulé par injection dans un moule d'injection dans lequel est inséré un noyau, puis le noyau est retiré et la broche métallique (5) dépourvue de têtes (7), de cônes (6) ou analogues est enfilée dans le perçage (8) du manchon en matière plastique (1) se trouvant dans le moule d'injection, à la suite de quoi, dans le même moule d'injection, les têtes, cônes ou analogues sont moulés par injection aux deux extrémités de la broche métallique, puis le manchon en matière plastique dans lequel est insérée la broche métallique est éjecté du moule.

2. Procédé de fabrication d'un manchon en matière plastique selon la revendication **caractérisé en ce que** les têtes (7), les cônes (6) et analogues sont moulés par injection d'une matière plastique ayant des propriétés différentes de celle du manchon en matière plastique (1).

3. Procédé de fabrication d'un manchon en matière plastique selon la revendication 2, **caractérisé en ce que** le manchon en matière plastique (1) est moulé par injection d'une matière plastique ayant une température de fusion plus élevée que la matière plastique prévue pour les têtes (7) et les cônes (6).

4. Procédé de fabrication d'un manchon en matière plastique selon une ou plusieurs des revendications précédentes, **caractérisé en ce que**, dans le cas d'un manchon en matière plastique conçu comme manchon expansible (1), un cône (6) est moulé par injection à une extrémité de la broche métallique (5) à l'intérieur de la partie expansible (3) partiellement fendue, et une tête (7) est moulée par injection à l'autre extrémité, à l'extérieur du manchon en matière plastique (1).

5. Procédé de fabrication d'un manchon en matière plastique selon la revendication 4, **caractérisé en ce que** la tête (7) et le cône (6) sont simultanément moulés par injection.

6. Procédé de fabrication d'un manchon en matière plastique selon la revendication 4, **caractérisé en ce qu'**on moule d'abord par injection le cône (6) puis la tête (7), ou inversement.

7. Procédé de fabrication d'un manchon en matière plastique selon une ou plusieurs des revendications précédentes, **caractérisé en ce que** la broche métallique (5) est, avant d'être insérée dans le perçage (8) du manchon en matière plastique (1), pourvue de contre-dépouilles aux deux extrémités.
